Europäisches Patentamt

European Patent Office

Office européen des brevets

(19)

(11) Veröffentlichungsnummer: **0 019 007**
**B1**

(12) # EUROPÄISCHE PATENTSCHRIFT

(45) Veröffentlichungstag der Patentschrift:
07.03.84

(51) Int. Cl.³: **C 03 B 5/02**, C 03 B 5/26,
F 27 B 3/08

(21) Anmeldenummer: 79101492.1

(22) Anmeldetag: 16.05.79

(54) Schmelzofen hoher Leistung für das Schmelzen aggressiver Mineralstoffe mit steilen Viskositätskurven.

(43) Veröffentlichungstag der Anmeldung:
26.11.80 Patentblatt 80/24

(45) Bekanntmachung des Hinweises auf die Patenterteilung:
07.03.84 Patentblatt 84/10

(84) Benannte Vertragsstaaten:
AT CH DE FR GB IT NL SE

(56) Entgegenhaltungen:
DE - B - 1 069 344
DE - B - 2 034 864
DE - B - 2 532 619
US - A - 3 208 841
US - A - 3 437 327
US - A - 4 063 027

(73) Patentinhaber: Sorg GmbH & Co. KG, Postfach 520,
D-8771 Pflochsbach (DE)
Patentinhaber: Eurofours Sociéte Anonyme, Rue du
Couvent 174, B-4500 Jupille s/Meuse (BE)

(72) Erfinder: Pieper, Helmut, Dipl.-Ing., Buchenstrasse 19,
D-8770 Lohr/Main (DE)

(74) Vertreter: Schulze Horn, Stefan, Dipl.-Ing. et al,
Goldstrasse 36, D-4400 Münster (DE)

## Schmelzofen hoher Leistung für das Schmelzen aggressiver Mineralstoffe mit steilen Viskositätskurven

Die Erfindung betrifft einen Schmelzofen hoher Leistung für das Schmelzen aggressiver Mineralstoffe mit steilen Viskositätskurven, mit Mitteln zur Aufgabe des Gemenges auf die Schmelze und mindestens einem Auslass zur Abführung der Schmelze, mit Elektroden zur Zuführung von elektrischer Energie zur Schmelze, die in dem Wannenboden senkrecht stehend eingesetzt sind und mindestens bis nahe der halben Badteife in die Schmelze hineinragen, und Brennern mit Regenerativ-Lufterhitzern in den Wänden oberhalb der Schmelze, wobei der Ofen einen im wesentlichen rechteckigen Grundriss aufweist und ein Gewölbe den Zwischenraum von Längswand zu Längswand überspannt.

Es ist bereits bekannt (DE-B-1 069 344), Glas in Öfen zu erschmelzen, die sowohl oberhalb des Gemenges konventionell mit Brennern und regenerativ vorgewärmter Luft als auch mit in das Schmelzbad eintauchenden Elektroden arbeiten. Diese bekannten Schmelzwannen weisen aber den Nachteil auf, dass sie aufgrund ihrer Konstruktion nicht dazu geeignet sind, hoch aggressive Stoffe zu schmelzen und insbesondere solche Gemische aufzuschmelzen, die einerseits einen Schmelzbereich bei relativ hoher Temperatur haben und dabei anderseits eine sehr steile Viskositätskurve und eine relativ niedrige elektrische Leitfähigkeit aufweisen. Insbesondere werden im Dauerbetrieb die Wände des Ofens und des Auslasses durchschmelzen.

Entsprechendes gilt für einen Ofen zum Schmelzen von Glas mit getrennter Läuter- und Arbeitswanne (US-A-3 208 841), bei welchem zwar auch durch den Boden ragende Elektroden zur zusätzlichen Beheizung neben den Brennern vorhanden sind, bei dem die Schmelze aber zwangsläufig auch im Wandbereich und insbesondere im Bereich des Auslasses aus der Läuterkammer aufgrund der hohen Temperatur und der Aggressivität des geschmolzenen Mineralstoffes das verwendete Feuerfestmaterial in Kürze durchschmelzen würde. Die steile Viskositätskurve erzwingt dabei, dass das geschmolzene Material überall die gleich hohe Schmelztemperatur aufweisen muss.

Unter steiler Viskositätskurve ist in diesem Zusammenhang zu verstehen, dass geringen Temperaturänderungen hohe Viskositätsänderungen gegenüberstehen, das heisst im Gegensatz zu herkömmlichem Glas oder anderen bekannten Mineralstoffen ändern sich die Viskositätswerte bis zur Dünnflüssigkeit im Schmelzbereich schon bei relativ geringen Temperaturerhöhungen.

Eine weitere Schwierigkeit im Schmelzen der genannten Gemische besteht darin, dass mit ausschliesslich konventioneller Schmelztechnik, d.h. allein mit Brennerbeheizung nicht gearbeitet werden kann, weil die Durchstrahlungsmöglichkeiten der Schmelze sehr gering sind und schon bei geringen Schichtdicken die Strahlung, auch wenn das Schmelzbad nicht vom Gemenge bedeckt ist, untere Schichten nicht mehr genügend erwärmt.

Es ist daher zur Zeit noch nicht möglich, in grosstechnischem Masse und insbesondere in Wannen mit hohen Durchsätzen Gemische aus Flugasche, Kalk und evtl. Sand zu Fritten zu erschmelzen. Eine solche Schmelze ist jedoch ausserordentlich vorteilhaft, da das erzeugte Schmelzgut, welches einen sehr hohen Glasanteil aufweist, nach dem Frittieren als Grundstoff für die Zementherstellung dienen kann.

Es ist Aufgabe der Erfindung, eine Schmelzwanne mit hoher Durchsatzleistung zum Erschmelzen der vorgenannten schwer zu erschmelzenden Gemische zu schaffen, die trotz der Aggressivität der Schmelze und der hohen Temperatur des Schmelzbereiches eine genügend lange Lebensdauer aufweist, um die grosstechnische, wirtschaftliche Herstellung des Grundstoffes zur Zementherstellung zu ermöglichen.

Insbesondere soll der erfindungsgemässe Ofen an die an ihn gestellten Aufgaben besonders gut angepasst sein und soll es ermöglichen, trotz der ungünstigen Viskositäts-Temperaturverhältnisse eine Einstellung der gewünschten Schmelzbadtiefe und einen geregelten Schmelzabzug vorzunehmen, wobei das Schmelzgut selbst eine Abschirmung der sonst zu stark beanspruchten Wandungen bilden soll.

Der Ofenbetrieb soll weiterhin mit dem erfindungsgemässen Schmelzofen so sicher und einfach sein, dass er auch von relativ ungeschultem Personal in Entwicklungsländern durchgeführt werden kann und er soll an verschiedene Zusammensetzungen des zu erschmelzenden Gemisches anpassbar sein.

Insbesondere ist es Aufgabe der Erfindung, einen Schmelzofen zu schaffen, bei welchem das Schmelzgut bzw. die Schmelze selbst für eine Abschirmung der Wandungen Sorge trägt.

Diese vorgenannte Aufgabe wird bei dem eingangs genannten Ofen erfindungsgemäss dadurch gelöst, dass der Auslass bzw. die Auslässe vom Wannenboden aus hochsteht bzw. hochstehen und mit dem Oberrand bis nahe an den Spiegel der Schmelze reicht bzw. reichen, dass die Elektroden einen die Ausbildung einer relativ kühlen Schmelz- oder Glasschicht gewährleistenden Abstand zu den Wänden aufweisen, die Längs- und/oder Querwände im Bereich der Schmelze von unten nach oben schräg nach aussen verlaufen, die die Brenner tragenden Querwände im Bereich oberhalb der Schmelze eine über das Schmelzbad vorspringende Stufe aufweisen und von dieser aus beginnend senkrecht verlaufen und dass das Gewölbe an den Längswänden eine über das Schmelzbad vorspringende Stufe aufweist, und seine Innenfläche von dieser aus beginnend ansteigt.

Um den erforderlichen Auslauf der Schmelze zu gewährleisten, ohne dass die verwendeten Ausläufe aufgrund zu geringer Schmelzentemperatur einfrieren oder nicht mit Schmelze beschickt werden, ist vorteilhaft eine Anzahl von in einer querverlaufenden Reihe angeordneten Ausläufen vorhanden. Die sich einstellenden Strömungsverhältnisse gewährleisten, dass alle Ausläufe mit genügend erhitzter Schmelze beschickt werden.

Um die Abschirmung der Ofenwandungen im Schmelzenbereich zu verbessern, weisen vorteilhaft die Längswände und/oder die Querwände im Schmelzbereich direkt unterhalb der darüber angeordneten Stufen einen senkrecht verlaufenden Abschnitt auf.

Dadurch wird erreicht, dass alle von der Schmelze beaufschlagten Teile der Wandungen besonders von der Flammstrahlung abgeschirmt sind und nicht überbeansprucht werden können.

Um ein bestimmtes Fliessverhalten des Gemenges zu ermöglichen, sind weiterhin vorteilhaft verschiedene Gruppen von jeweils mit einem regelbaren Transformator elektrisch verbundenen Elektroden vorhanden, so dass die Energiezugabe über die Ofenfläche verteilt geregelt werden kann. Die Aufgabe des Gemenges erfolgt dabei in den Ecken des rechteckigen Schmelzbades, wobei die Brenner und die Zuführung der regenerativ erhitzten Luft in den Querwänden vorgesehen sind.

Insgesamt ermöglicht die erfindungsgemässe Ausbildung eines Schmelzofens es erstmalig, auch Schmelzen mit hohen Schmelzbereichen und steilen Viskositätskurven für den grosstechnischen Einsatz zu handhaben, die ausserordentlich aggressiv sind, und angesichts der Einfachheit der eingesetzten Mittel kann von einer idealen Lösung der anstehenden Probleme gesprochen werden.

Im folgenden wird ein Ausführungsbeispiel der Erfindung anhand von Zeichnungen näher erläutert. Es zeigen:

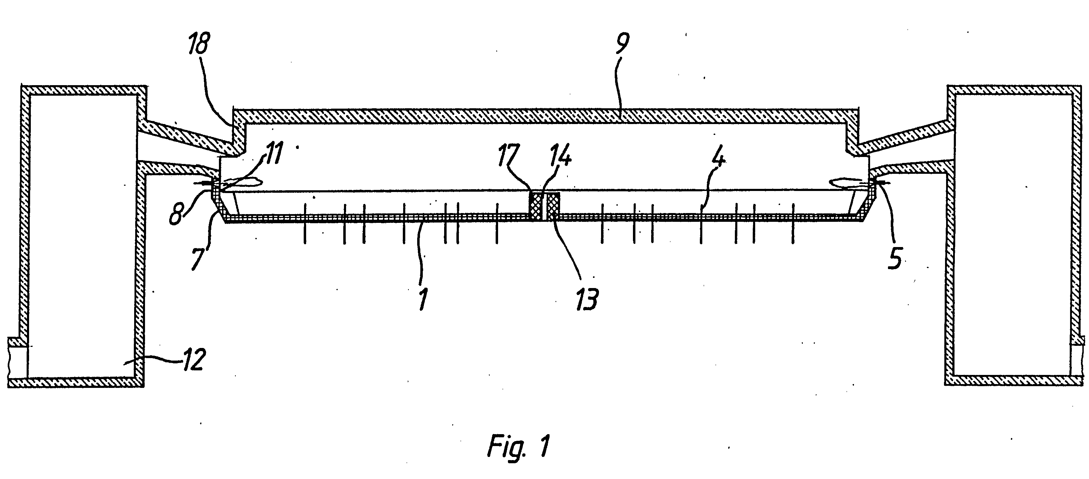

Fig. 1 schematisch einen erfindungsgemässen Ofen im Vertikalschnitt,

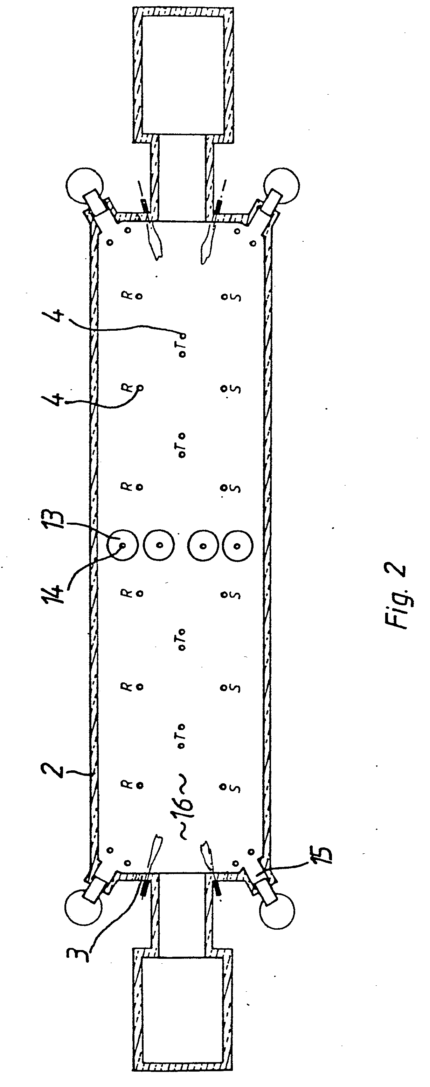

Fig. 2 den Ofen gemäss Fig. 1 in Aufsicht und

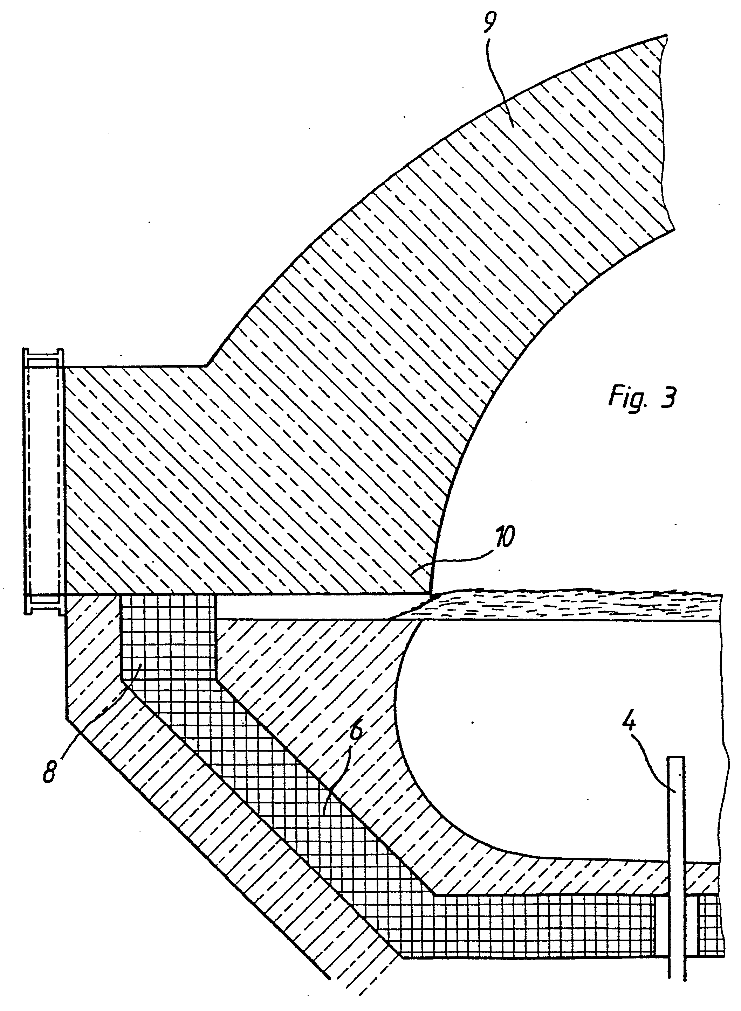

Fig. 3 einen Ausschnitt in vergrössertem Massstab aus einem Vertikalschnitt durch den Ofen gemäss Fig. 1 und 2, wobei dieser Schnitt im rechten Winkel zum Schnitt gemäss Fig. 1 angeordnet ist.

Die erfindungsgemässe Schmelzwanne bzw. der Schmelzofen wird im wesentlichen mit denjenigen Wandungsteilen, die mit der Schmelze oder dem erweichten Gemenge in Berührung kommen, aus Magnesit-Chromsteinen ausgebaut, falls nicht ein Chromoxydstein verwendet wird. Es hat sich gezeigt, dass diese Materialien bei Einhaltung einer nicht zu hoch angesetzten Temperatur, d.h. bei Temperaturen von nicht mehr als 1350 bis 1400°C, eine genügende Standzeit aufweisen, um einen befriedigenden Ofenbetrieb aufrecht zu erhalten. Die nicht mit der Schmelze in Berührung kommenden Wandungsteile sind aus herkömmlichen und bekannten Feuerfest-Materialien aufgebaut.

Die in den Wannenboden 1 eingesetzten Elektroden 4 sind wegen ihrer hohen Belastung innen gekühlt, ihr Aufbau entspricht dem herkömmlicher innengekühlter Elektroden, so dass darauf nicht näher eingegangen zu werden braucht. Erfindungswesentlich ist es aber, dass der Abstand der Elektroden 4 zu den Wänden 2 und 3 in jedem Fall ausreichend gewählt wird, um zu gewährleisten, dass an den Wandungen eine kalte Schmelze bzw. ein kaltes Glas, evtl. sogar eine auskristallisierte Phase gebildet wird.

Der erfindungsgemässe Schmelzofen ist in üblicher Weise aufgebaut, d.h. das Mauerwerk der Ofenwandung und des Gewölbes wird von einem äusseren Stützgerüst aus geeigneten Eisen- und Stahlträgern gehalten.

Die Elektroden 4 weisen eine erhebliche Länge auf und ragen nach Durchstossen des Ofenbodens 1 im erheblichen Umfang, vorzugsweise mehr als die Hälfte der Höhe der Schmelze in diese hinein. Da bei Elektroden die höchste Wärme an ihren Spitzen frei wird, wird damit gewährleistet, dass die meiste elektrisch zugeführte Energie in den Bereichen fern von dem Ofenboden und den Materialien der Wandung und des Auslasses freigesetzt wird, dass also die notwendige hohe Schmelztemperatur hier erreicht wird und die Wandmaterialien dennoch genügend thermisch abgeschirmt sind.

Das Gemenge bzw. die Schmelze bilden also eine Schutzschicht mit nach aussen sinkender Temperatur, so dass die Wandtemperatur die zulässigen Werte nirgendwo überschreitet. Der Auslass selbst, der aus Chromoxydsteinen besteht, kann dabei thermisch höher belastet werden als die genannten Magnesitchromsteine.

Die eingesetzten Elektroden 4 weisen einen relativ grossen Durchmesser von 60 bis 80 mm auf, und ihre Schaltung ist dabei so, dass jeweils nebeneinander angeordnete Elektroden mit den verschiedenen Phasen R, S und T der Sekundärseite eines regelbaren Transformators verbunden sind, so dass der Hauptstromfluss immer zwischen einer Elektrodengruppe erfolgt und dadurch in bestimmten Ofenbereichen die Temperatur der Schmelze beeinflusst werden kann, so dass es möglich ist, eine Bewegung des auf der Schmelze schwimmenden Gemenges einzustellen. In den Zeichnungen ist neben jeder Elektrode die mit ihr verbundene Phase angegeben.

Im einzelnen sind die Längs- und Querwände 2 und 3 so aufgebaut, dass oberhalb des schrägen Teiles 6 bzw. 7 sich ein kurzer senkrechter Teil 8 anschliesst, welcher die Unterstützung des darüber befindlichen Gewölbes 9 bzw. des senkrechten Teils 18 der Querwand 3 bildete. Das Gewölbe 9 und der senkrechte Teil 18 weisen dabei eine nach innen, über das Schmelzbad vorstehende Stufe 10 bzw. 11 auf, von deren Innenkante aus das weitere Mauerwerk hochgeführt ist.

Die umlaufenden Stufen 10 bzw. 11 gewährleisten damit, dass die Flammstrahlung den Wandungsteil 8 nicht zugleich mit der aggressiven Schmelze beaufschlagt und die Wandung dort überbeansprucht würde. Ausserdem wird gewährleistet, dass sich unterhalb der Stufen 10 und 11 ein relativ kalter Schmelzenbereich bildet, der die Wandungen 6 und 7 sowie den darauf aufgesetzten Teil 8 genügend abschirmt. Da weiterhin die Energiezuführung im Bodenbereich unterbleibt, bildet sich auch hier ein kalter Bereich aus, der für eine genügende Abschirmung sorgt.

In den oberhalb der Schmelze befindlichen Teilen 18 der Querwände 3 sind Brenner 5 und Regenerativ-Verbrennungslufterhitzer angeordnet, die in an sich bekannter Weise arbeiten. In üblicher Weise werden die Regenerativ-Kammererhitzer 12 ähnlich wie bei herkömmlichen Schmelzwannen nach ca. 20 bis 30 Minuten umgeschaltet.

In den Querwänden 3 bzw. deren oberen Teilen 18 sind nahe den Längswänden 2 weiterhin Doghäuser 15 zur Beschickung des Ofenraumes mit Gemenge vorhanden, in denen nicht gezeigte, bekannte Fördermittel für die Aufgabe des Gemenges auf die Schmelze Sorge tragen. Direkt unterhalb des Aufgabepunktes des Gemenges sind weitere Elektroden 4 angeordnet, um die Viskosität der Schmelze in diesem Bereich soweit zu erniedrigen, dass das Gemenge sicher abschwimmt.

Die Auslässe 13 zur Abführung des geschmolzenen Gemisches bzw. der Schmelze sind in einer Querreihe in der Mitte der Wanne angeordnet, sie sind auf den Boden 1 der Wanne aufgesetzt und mit einem mittleren Durchlass 14 versehen. Der Oberrand der Auslässe 13 weist einen erheblichen Abstand vom Wannenboden auf, um die Schmelze aus ihrem heissesten Bereich, aber unterhalb der Gemengedecke abziehen zu können.

Mit der gewählten Anordnung der Brenner an den Querwänden wird eine optimale Beaufschlagung der Gemengedecke mit Wärme durch die Brenngase und Flammen ermöglicht, so dass sichergestellt ist, dass nicht zu viel ungeschmolzenes Gemenge durch die Auslässe 13 abgeführt wird. Die Gemengezuführung in den vier Ecken gewährleistet dabei gleichzeitig eine gleichmässige Abdeckung des Schmelzbades 16 mit dem Gemenge.

Das durch den Durchlass 14 herabfliessende Schmelzgut kann entweder zum Erstarren gebracht werden und danach zerkleinert werden, es kann aber auch auf eine rotierende Walze unter Wasserkühlung auftreffen und wird dabei direkt zu Fritten umgestaltet, die mittels eines Kratzförderers aus dem Auffang-Wasserbad entfernt werden können. Das Schmelzgut liegt in diesem Fall dann direkt in weiterverarbeitbarer Form vor.

## Patentansprüche

1. Schmelzofen hoher Leistung für das Schmelzen aggressiver Mineralstoffe mit steilen Viskositätskurven, mit Mitteln zur Aufgabe des Gemenges auf die Schmelze (16) und mindestens einem Auslass zur Abführung der Schmelze, mit Elektroden (4) zur Zuführung von elektrischer Energie zur Schmelze, die in dem Wannenboden (1) senkrecht stehend eingesetzt sind und mindestens bis nahe der halben Badtiefe in die Schmelze (16) hineinragen, und Brennern (5) mit Regenerativ-Lufterhitzern (12) in den Wänden oberhalb der Schmelze, wobei der Ofen einen im wesentlichen rechteckigen Grundriss aufweist und ein Gewölbe (9) den Zwischenraum von Längswand (2) zu Längswand (2) überspannt, dadurch gekennzeichnet, dass der Auslass (13) bzw. die Auslässe (13) vom Wannenboden (1) aus hochsteht bzw. hochstehen und mit dem Oberrand (17) bis nahe an den Spiegel der Schmelze reicht bzw. reichen, dass die Elektroden (4) einen die Ausbildung einer relativ kühlen Schmelze- oder Glasschicht gewährleistenden Abstand zu den Wänden (2 und 3) aufweisen, die Längs- und/oder Querwände (2 bzw. 3) im Bereich der Schmelze (16) von unten nach oben schräg nach aussen verlaufen, die die Brenner (5) tragenden Querwände (3) im Bereich oberhalb der Schmelze eine über das Schmelzbad (16) vorspringende Stufe (11) aufweisen und von dieser aus beginnend senkrecht verlaufen und dass das Gewölbe (9) an den Längswänden (2) eine über das Schmelzbad vorspringende Stufe (10) aufweist und seine Innenfläche von dieser aus beginnend ansteigt.

2. Schmelzofen nach Anspruch 1, dadurch gekennzeichnet, dass eine Anzahl von in einer quer verlaufenden Reihe angeordneten Ausläufen (13) vorhanden ist.

3. Schmelzofen nach Anspruch 1 oder 2, dadurch gekennzeichnet, dass die Längswände (2) und/oder die Querwände (3) im Schmelzbereich direkt unterhalb der darüber angeordneten Stufen (10, 11) einen senkrecht verlaufenden Abschnitt aufweisen.

## Claims

1. A melting furnace of high efficiency for the melting of aggressive mineral materials having steep viscosity curves, comprising means for feeding the mixture onto the molten mass (16) and at least one outlet for discharging the molten mass, electrodes (4) for supplying electrical energy to the molten mass, which electrodes are embedded in a vertical position into the bottom (1) of the trough and extend into the molten mass (16) to at least a point close to one half of the bath depth, and burners (5) including regenerative air heaters (12) in the walls above the molten mass, with the furnace having a substantially rectangular horizontal plan and a roof arch or crown (9) spans the space from one longitudinal wall (2) to the other longitudinal wall (2), characterized in that the outlet (13) or the outlets (13) stands or stand up, respectively, from the bottom (1) of the trough and have their upper edge (17), each reaching to a point close to the surface level of the molten mass; that the electrodes (4) have a spacing from the walls (2 and 3) which provides for the formation of a relatively cool melt or glass layer; the longitudinal and/or transverse walls (2 or 3) extend to be inclined in outward direction from the bottom to the top in the region above the molten mass, a step (11) protruding over the melt bath (16), and extend in vertical direction starting from said step; and that the roof arch (9) includes at the longitudinal walls (2) a step (10) protruding over the melt bath, with the inner surface of the roof arch starting to rise at said step.

2. The melting furnace according to claim 1, characterized in that a plurality of outlets (13) positioned in a transverse row are provided.

3. The melting furnace according to claims 1 or 2, characterized in that the longitudinal walls (2) and/or the transverse walls (3) include in the melting or melt region a vertically extending portion directly beneath the steps (10, 11) disposed thereabove.

## Revendications

1. Four de fusion à grand rendement pour fondre des substances minérales agressives présentant des courbes de viscosité à pente raide, comportant des moyens de chargement du mélange sur le bain de fusion (16) et au moins une sortie pour l'évacuation de la matière fondue, des électrodes (4) susceptibles d'amener de l'énergie électrique vers le bain de fusion, fichées verticalement debout dans le fond de la cuve et s'étendant dans le bain de fusion (16) au moins jusqu'à approximativement la moitié de la profondeur du bain, ledit four comportant en outre des brûleurs (5) avec des réchauffeurs d'air régénératifs (12) dans les parois, au-dessus du bain de fusion, ledit four présentant, par ailleurs, une section sensiblement rectangulaire et comportant une voûte (9) recouvrant l'intervalle entre les parois longitudinales (2), caractérisé en ce que la ou les sortie(s) (13) s'étend(ent) vers le haut à partir du fond de la cuve (1), leur bord supérieur (17) se situant à proximité de la surface du bain de fusion, en ce que les électrodes (4) sont placées à une distance des parois (2 et 3) telle que la formation d'une couche de matière fondue ou de verre relativement froide soit assurée, en ce que les parois longitudinales et/ou transversales (2 ou 3) s'étendent obliquement vers l'extérieur du bas vers le haut, dans la zone du bain de fusion (16), en ce que les parois transversales (3) portant les brûleurs (5) présentent, dans la zone située au-dessus du bain de fusion, un décrochement (11) faisant saillie au-dessus dudit bain de fusion (16), et à partir duquel elles s'étendent verticalement, et en ce que la voûte (9) présente, aux parois longitudinales (2), un décrochement (10) faisant saillie au-dessus du bain de fusion, cependant que la surface intérieure de ladite voûte s'étend vers le haut à partir de ce décrochement.

2. Four de fusion selon la revendication 1, caractérisé en ce qu'il est prévu une pluralité de sorties (13) disposées de manière à former une rangée transversale.

3. Four de fusion selon la revendication 1 ou 2, caractérisé en ce que les parois longitudinales (2) et/ou les parois transversales (3) présentent, dans la zone de fusion, immédiatement au-dessous des décrochements (10, 11) disposés au-dessus, une partie s'étendant verticalement.

Fig. 1

Fig. 2

Fig. 3